**Europäisches Patentamt**

**European Patent Office**

**Office européen des brevets**

(19)

(11) Veröffentlichungsnummer: **0 092 642**
B1

(12)

# EUROPÄISCHE PATENTSCHRIFT

(45) Veröffentlichungstag der Patentschrift:
**13.05.87**

(21) Anmeldenummer: **83100893.3**

(22) Anmeldetag: **01.02.83**

(51) Int. Cl.⁴: **B 23 K 9/06**, H 02 M 7/08, G 05 B 19/02

(54) **Stromquelle für das Schweissen mit magnetisch bewegtem Lichtbogen.**

(30) Priorität: **28.04.82 DE 3215806**

(43) Veröffentlichungstag der Anmeldung:
**02.11.83 Patentblatt 83/44**

(45) Bekanntmachung des Hinweises auf die Patenterteilung:
**13.05.87 Patentblatt 87/20**

(84) Benannte Vertragsstaaten:
**DE FR GB IT SE**

(56) Entgegenhaltungen:
**EP - A - 0 029 524**
**DE - B - 1 132 233**
**DE - B - 1 203 376**
**DE - C - 1 146 568**
**FR - A - 2 381 587**

**Patent Abstracts of Japan, Band 5, Nr. 158, 12. Oktober 1981**

(73) Patentinhaber: **KUKA Schweissanlagen & Roboter GmbH, Blücherstrasse 144, D-8900 Augsburg (DE)**

(72) Erfinder: **Mazac, Karel, Dahlienweg 1, D-8904 Friedberg (DE)**

(74) Vertreter: **Ernicke, Hans-Dieter, Dipl.-Ing., Schwibbogenplatz 2b, D-8900 Augsburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Stromquelle für das Schweissen mit magnetisch bewegtem Lichtbogen nach einem vorgeschriebenen Stromprogramm, das mehrere Stromstufen ($i_1$, $i_1 + i_2$, $i_1 + i_2 + i_3$) während aufeinanderfolgender Zeitintervalle ($t_1$, $t_2$ $t_3$) umfasst, bei der eine der Zahl der im Schweissprogramm vorkommenden, verschiedenen Grobstufen entsprechende Anzahl von einzelnen Gleichstromquellen parallelgeschaltet ist, und die einzelnen Stromquellen von einer zeitabhängigen Steuerschaltung angesteuert sind, wobei der Strom der ersten Einzelstromquelle dem kleinsten programmierten Stromwert entspricht.

Bei einer solchen, durch die DE-A-1 146 568 bekannten Schweissstromquelle werden die einzelnen Stromquellen abwechselnd nacheinander eingeschaltet, um entsprechend dem Stromprogramm unterschiedlich grosse Steuerspannungen einem im Primärkreis eines Schweisstransformators liegenden Steuertransistor zuzuführen. Diese vorbekannte Schaltung ist verhältnismässig aufwendig.

Der Erfindung liegt daher die Aufgabe zugrunde, eine möglichst einfache Schweissstromquelle zu schaffen, die universell für alle Schweissaufgaben, insbesondere für solche mit sehr grossen Stromwertunterschieden während des Schweissvorgangs, einsetzbar ist, so dass man ohne jede Änderung der Stromquelle auch mit sehr unterschiedlichen Verhältnissen von Anlaufstrom, Grundstrom und Schlussstrom arbeiten kann, wobei die Änderung schnell und einfach erfolgen soll.

Diese Aufgabe wird erfindungsgemäss dadurch gelöst, dass bei einer Schaltung der eingangs genannten Art die Ströme der anderen Einzelstromquellen jeweils der Differenz gegenüber der nächsthöheren Stromstufe entsprechen, und dass durch die Steuerschaltung diejenigen Einzelstromquellen zum Einspeisen direkt in den Schweissstromkreis parallel schaltbar sind, deren Strom insgesamt den jeweils in Abhängigkeit von der Zeit vorgegebenen Stromwert des Stromprogramms ergeben.

Die Einzelstromquellen liegen also unmittelbar parallel zum Lichtbogen. Die Summe der jeweils parallel geschalteten Einzelstromquellen ergibt den jeweiligen Schweissstrom. Ist die Differenz zwischen den einzelnen Stromstufen jeweils gleich, so ist jede weitere Einzelstromquelle für gleichen Strom bemessen. Sind die Unterschiede zwischen den Stufen ungleich, so ist jede Quelle für einen entsprechend verschiedenen Stromwert auszulegen. Die Summe aller Ströme der einzelnen Quellen ergibt den maximalen Strom des Stromprogramms.

Durch die Erfindung erhält man auf eine äusserst einfache Weise eine Stromregelung über sehr grosse Regelbereiche, die bisher, obwohl schon lange erwünscht, noch nicht mit so einfachen Mitteln erreicht worden ist. Es ist zwar bekannt, einen gewünschten hohen Strom durch Parallelschalten von zwei oder mehr Stromquellen herzustellen, nicht aber durch eine gezielte Parallelschaltung, wie durch die Erfindung angegeben, das Problem zu lösen, auf möglichst einfache Weise einen grossen Regelbereich, wie er gerade beim Schweissen mit magnetisch bewegtem Lichtbogen häufig verlangt wird, zu beherrschen.

Die erfindungsgemässe Stromquelle ist sehr viel-seitig anwendbar. Die einzelnen parallel geschalteten «Unterstromquellen» können beispielsweise durch eine Programmänderung separat, gleichzeitig oder beliebig nacheinander geschaltet werden. Man erreicht durch die Erfindung einen wesentlich grösseren Regelbereich, als dieses bei einem grossen Gleichrichter der Fall ist. Die Leerlaufspannung der Einzelstromquellen darf unterschiedlich sein. Auch die Schaltung der einzelnen Transformatoren kann unterschiedlich sein. diese Transformatoren müssen nicht unbedingt die gleiche Phasenzahl haben.

Ein weiterer Vorteil der Erfindung besteht darin, dass mit ihr verschiedene Programme in beliebigen Verhältnissen stufenlos oder stufenweise eingestellt werden können. Insbesondere ist im Rahmen der Erfindung eine Feineinstellung der verschiedenen Stromwerte bzw. Stromstufen des Stromprogramms möglich, wobei es bereits ausreicht, wenn wengistens eine der Einzelstromquellen zusätzlich noch auf verschiedene Stromwerte einstellbar ist, so dass bei entsprechendem Aufwand eine nahezu quasi stufenlose Regelung erreicht werden kann.

Die Erfindung ist in der Zeichnung beispielsweise und schematisch dargestellt. Es zeigen:

Fig. 1: ein Stromprogramm,

Fig. 2: eine Schaltung einer Stromquelle zur Durchführung des Stromprogramms gem. Fig. 1 und

Fig. 3: eine Schaltung einer weiteren Stromquelle gemäss der Erfindung.

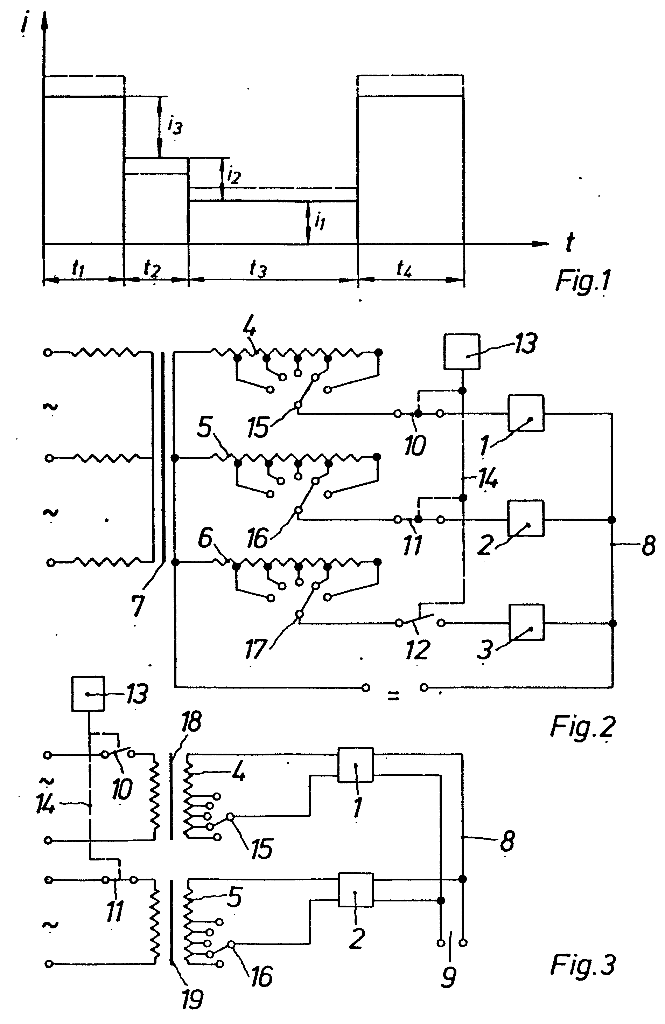

Das Stromprogramm in Figur 1 zeigt einen gewünschten Verlauf eines Schweissstroms i in Abhängigkeit von der Zeit t. In dem Programm kommen drei verschieden hohe Stromstufen vor während der Zeitintervalle $t_1$ bis $t_4$. Der Stromwert während des letzten Intervalls $t_4$ ist gleich demjenigen des ersten Intervalls $t_1$. Zunächst sollen die in Fig. 1 gestrichelt dargestellten Linien ausser Betracht bleiben.

Zur Durchführung des drei unterschiedliche Grobstufenwerte aufweisenden Stromprogramms ist eine Stromquelle gem. Fig. 1 geeignet, die aus drei parallel geschalteten Stromquellen besteht, die im wesentlichen jeweils gebildet sind durch einen von drei Gleichrichtern 1, 2, 3, die jeweils aus den ihnen zugeordneten Phasenwicklungen 4, 5, 6 der Sekundärwicklung eines in Stern geschalteten Transformators 7 gespeist werden. Die Ausgänge der drei Gleichrichter liegen parallel an einer Leitung 8, die mit ihren Klemmen 9 in bekannter Weise an ein nicht näher dargestelltes Lichtbogenschweissgerät anzuschliessen ist. Die Stromquellen 1, 2, 3 sind erfindungsgemäss zur Durchführung des Stromprogramms bei der dargestellten Schaltung jeweils ausgelegt für einen

Strom $i_1$, $i_2$ bzw. $i_3$ (Fig. 1). Die Zu- und Abschaltung der einzelnen Stromquellen erfolgt mittels der Grobstufenschalter 10, 11, 12, die durch eine Steuerschaltung 13 mit an sich bekannten Mitteln, z.B. zeitabhängig betätigten Relais, entsprechend dem Stromprogramm gem. Fig. 1 betätigt werden. Dies ist schematisch durch eine gestrichelt gezeichnete Steuerleitung 14 dargestellt.

Während der Anlaufphase des Schweissvorganges ist gem. Stromprogramm ein hoher Strom erforderlich. Demgemäss sind alle drei Stromquellen eingeschaltet. Während des folgenden Intervalls $t_2$, in dem mit einem bereits merklich verringerten Strom gefahren wird, sind lediglich die Stromquellen 1 und 2 durch Öffnen des Grobstufenschalters 12 an die Leitung 8 angeschaltet. Dieser Zustand ist in Fig. 2 dargestellt.

Für den dann anschliessend während der Zeit $t_3$ benötigten geringeren Strom $i_1$ ist nur die hierfür ausgelegte Stromquelle 1 eingeschaltet.

In der Endphase des Schweissvorganges sind zur Erzeugung des dann erforderlichen hohen Schlussstromes $i_1 + i_2 + i_3$ wieder alle drei Stromquellen 1, 2 und 3 eingeschaltet.

Soll das Stromprogramm geringfügig geändert bzw. korrigiert werden, beispielsweise entsprechend den in Fig. 1 gestrichelt eingezeichneten Linien, so kann dies durch entsprechende Einstellung der Feinstufenschalter 15, 16, 17 in den drei Stromquellen erreicht werden.

In Fig. 3 ist eine weitere Stromquelle zur Durchführung eines nur zwei unterschiedliche Grobstufenwerte aufweisenden Stromprogramms dargestellt. Sie unterscheidet sich in ihrem Aufbau von dem Beispiel gemäss Fig. 2 lediglich dadurch, dass hier zwei getrennte Transformatoren verwendet werden. Die sonstigen, mit denen der Figur 2 funktionsgleichen Bauelemente sind daher mit gleichen Bezugszahlen versehen.

Stückliste
1 Gleichrichter
2 Gleichrichter
3 Gleichrichter
4 Phasenwicklung
5 Phasenwicklung
6 Phasenwicklung
7 Transformator
8 Leitung
9 Klemmen
10 Grobstufenschalter
11 Grobstufenschalter
12 Grobstufenschalter
13 Steuerschaltung
14 Steuerleitung
15 Feinstufenschalter
16 Feinstufenschalter
17 Feinstufenschalter
18 Transformator
19 Transformator

**Patentansprüche**

1. Stromquelle für das Schweissen mit magnetisch bewegtem Lichtbogen nach einem vorgeschriebenen Stromprogramm, das mehrere Stromstufen ($i_1$, $i_1 + i_2$, $i_1 + i_2 + i_3$) während aufeinanderfolgender Zeitintervalle ($t_1$, $t_2$, $t_3$) umfasst, bei der eine der Zahl der im Schweissprogramm vorkommenden, verschiedenen Grobstufen entsprechende Anzahl von einzelnen Gleichstromquellen (1, 2, 3) parallelgeschaltet ist, und die einzelnen Stromquellen (1, 2, 3) von einer zeitabhängigen Steuerschaltung (10 bis 14) angesteuert sind, wobei der Strom ($i_1$) der ersten Stromquelle (1) dem kleinsten programmierten Schweissstrom entspricht, dadurch gekennzeichnet, dass die Ströme ($i_2$, $i_3$) der anderen Einzelstromquellen (2, 3) jeweils der Differenz gegenüber der nächsthöheren Stromstufe entsprechen, und dass durch die Steuerschaltung (10 bis 14) diejenigen Einzelstromquellen (1, 2, 3) zum Einspeisen direkt in den Schweissstromkreis parallelschaltbar sind, deren Ströme ($i_1$, $i_2$, $i_3$) insgesamt den jeweils in Abhängigkeit von der Zeit vorgegebenen Stromwert des Stromprogramms ergeben.

2. Stromquelle nach Anspruch 1, dadurch gekennzeichnet, dass mindestens eine der Einzelstromquellen (1, 2, 3) auf verschiedene Stromwerte einstellbar ist.

**Claims**

1. A current source for welding with a magnetically moving arc according to a prescribed current programme, which comprise multiple current steps ($i_1$, $i_1 + i_2$, $i_1 + i_2 + i_3$) during successive time intervals ($t_1$, $t_2$, $t_3$), wherein a number of the single direct currents (1, 2, 3) corresponding to the number of different coarse steps occurring in the welding programme are in parallel, and the single current sources (1, 2, 3) are controlled by a time-dependent control circuit (10 to 14), the current ($i_1$) of the first current source (1) corresponding to the smallest programmed current source ($i_1$), characterised in that the currents ($i_2$, $i_3$) of the other single current sources (2, 3) correspond respectively to the difference in relation to the next highest current stage, and that via the control circuit (10 to 14) those single current sources (1, 2, 3) for feeding can be connected in parallel to the electric circuit for welding, of which the currents ($i_1$, $i_2$ $i_3$) provide in total the preset current value of the current programme dependent respectively on the time.

2. A current source according to claim 1, characterised in that at least one of the single current sources (1, 2, 3) can be adjusted to different current values.

**Revendications**

1. Source de courant pour le soudage effectué avec un arc électrique déplacé par voie magnétique, conformément à un programme prescrit de courant, qui comporte plusieurs paliers de courant ($i_1$, $i_1 + i_2$, $i_1 + i_2 + i_3$), et dans laquelle un nombre, correspondant au nombre d'étages grossiers différents intervenant dans le programme de soudage, de sources individuelles de courant continu (1, 2, 3) sont branchées en parallèle et les différentes sources de courant (1, 2, 3) sont commandées apr un circuit de commande (10 à 14) agissant en fonction du temps, le courant ($i_1$) de la première source de courant (1) correspondant au courant de soudage le plus faible programmé, caractérisé par le fait que les courants ($i_2$, $i_3$) des autres sources individuelles de courant (1, 2, 3) correspondent aux différences respectives par rapport au palier de courant immédiatement supérieur, et que les sources individuelles de courant (1, 2, 3), dont les courants ($i_1$, $i_2$, $i_3$) produisent globalement l'intensité du programme de courant, prédéterminée respectivement en fonction du temps, peuvent être branchées en parallèle par le circuit de commande (10 à 14), pour réaliser une alimentation, directement dans le circuit de soudage.

2. Source de courant suivant la revendication 1, caractérisée par le fait qu'au moins l'une des sources individuelles de courant (1, 2, 3) est réglable sur différentes valeurs d'intensité.

Fig.1

Fig.2

Fig.3